# EUROPEAN PATENT APPLICATION

(11) **EP 1 953 990 A1**
(43) Date of publication of application: **06.08.2008**
(21) Application number: 06828170.8
(22) Date of filing: 20.11.2006
(51) Int. Cl.: H04L 29/06

(54) **A METHOD, SYSTEM AND DEVICE FOR REALIZING CALL WAITING IN PACKET DOMAIN**

(30) Priority: 18.11.2005 CN 200510101674
(71) Applicant: Huawei Technologies Co., Ltd., Longgang District Shenzhen 518129 (CN)
(72) Inventor: SHI, Youzhu, Shenzhen, Guangdong 518129 (CN)
(74) Representative: Hengelhaupt, Jürgen
(86) International application number: PCT/CN2006/003112
(87) International publication number: WO 2007/056958

(57) **Abstract**

A method is used to realize call waiting in packet domain. In the packet telecommunication network using SIP as call control signal of core network, SIP terminal user realizes call waiting service of temporary precontract, call waiting service of temporary cancel and when the call waiting service is being performing, uses the SIP message containing the information of operating temporary precontract call waiting, the information of operating temporary cancel call waiting, and uses the information be extracted by SIP terminal and expressing call waiting application mark. The information enables the SIP terminal user to use the operation for activating temporary precontract call waiting and deactivating temporary cancel call waiting, and enables the user to perform the operation of keeping the original communication while changing to communicate to the new call when the user is formed that a new call is accessed. The method has good inheritance to the basic service characteristic in traditional telecommunication network and has complete execution; the expedience for user using call waiting service is improved greatly.

## Description

### Field of the Invention

The present invention relates to the field of communication technologies, and particularly to a method, system and device for implementing Call Waiting in a packet domain.

### Background of the Invention

The Call Waiting is a common telecommunication service, which is defined in the Public Switched Telephone Network (PSTN) as that: while a user A is on a call with a user B, and a user C attempts to establish a call connection with the user A, at this time, an indication of Call Waiting is presented to the user A to indicate that an incoming call from another user is waiting.

A user may activate the Call Waiting service as follows: the user may apply to a telephone exchange office in advance for the Call Waiting functionality, and may enjoy the functionality after the application is registered; alternatively, a switch equipment may provide the user with the ability of activating the Call Waiting service, and the Call Waiting service may be put to use depending on the Call Waiting service code through the following procedures: off-hook, pressing a service code (for example, *58#), responding and on-hook.

The user may deactivate the temporarily registered Call Waiting through the following procedures: off-hook, pressing a service code (for example, #58#), responding, and on-hook.

After the user A activates the Call Waiting service, if the user C calls the user A who is on a call with the user B, a "Call Waiting tone" is provided for the user A and a ring back tone is provided for the user C. At this time, the user A may have three options of rejecting the incoming call from the new user, switching over to a call with the new user while holding the call with the original user, and terminating the call with the original user and switching over to a call with the new user.

The Call Waiting service can also be applied in the Integrated Service Digital Network (ISDN). In the ISDN, the Call Waiting service is defined as that: the Call Waiting service allows a user to be notified upon an incoming call about the fact that no idle information channel is available in an interface, and the user may accept, reject or ignore the call that is waiting.

An ISDN user activates and deactivates the Call Waiting service in a way similar to that for the PSTN user. The ISDN user activates and deactivates the Call Waiting service as follows.

After the ISDN user activates the Call Waiting service, in the case that no channel resource is available in a user interface, if there is an incoming call from the user C which is waiting to be answered by the ISDN user, the ISDN user receives an out-band indication that someone is calling and no channel is available in the interface. At this time, the ISDN user may have three options of rejecting the new incoming call, switching over to a call with the user C while holding the call with the original user, and terminating the call with the original user and switching over to a call with the user C.

As can be seen from the above, the Call Waiting service is applied in substantially the same way in the PSTN and the ISDN, both the PSTN and the ISDN provide two activation approaches, i.e., an approach of permanent subscription through application to the telephone exchange office and an approach of temporary subscription through operations of pressing phone keys, and the user is provided with three options of applying the Call Waiting service. In comparison with the approach of permanent subscription, the approach of temporary subscription requires the user to operate a terminal, but enables (for a certain period of time) the user to choose freely whether to subscribe for the Call Waiting service, without repeated subscription with the telephone exchange office and cancellation of the subscription, which facilitates the use of the service for the user.

Particularly in some countries and regions, there is also provided an approach of temporarily canceling Call Waiting, which is referred to as Cancel Call Waiting (CCW) service. After the Call Waiting service is activated for a user, the user may dial additionally a prefix for temporarily canceling Call Waiting when initiating a call, as a result, the Call Waiting service is disabled temporarily for this call.

For example, if a user needs to make a call with an important client and expects no interruption during the call, the user dials additionally a prefix for temporarily canceling Call Waiting prior to the number of the client. During the call, another user who calls the user is provided with a busy tone, and thus the call of the user is not interrupted. The service of temporarily canceling Call Waiting is invalidated with the ending of the call. If the user initiates a call again without dialing additionally the prefix for temporarily canceling Call Waiting prior to the called number, the Call Waiting service of the user is applied if another user calls the user during the call.

The service of temporarily canceling Call Waiting is also allowed to be applied during a call. If a user who has activated the Call Waiting service is in a call and expects no interruption during the call, the user may listen for a dial tone by pressing the hook-flash while holding the call with the other party, dial a prefix for temporarily canceling Call Waiting and return to the call with the other party by pressing the hook-flash again, as a result, the Call Waiting service for the user is cancelled temporarily during the this call.

At present, as packet technologies getting matured, the traditional telecommunication network based upon circuit switching is evolving to a broadband telecommunication network based packet switching. With the current technology development, the Session Initiation Protocol (SIP) trends to be used as the call control signaling of the packet telecommunication core network, for example, in the Next Generation Network (NGN) which is a new packet telecommunication network, the traditional terminal phone sets are to be replaced with new packet terminals, i.e., SIP terminals.

Apparently, as a service widely used in the traditional telecommunication network, the Call Waiting service is still necessary to be provided for a SIP terminal user. However, because the application environment is changed, the Call Waiting service to be provided for a SIP terminal in the NGN is changed inevitably. In the Telecommunications and Internet Converged Services and Protocols for Advanced Networking (TISPAN), such services with the traditional service features and provided for a SIP terminal user in the NGN are referred to as PSTN/ISDN simulation services, in which the Call Waiting service is referred to as Communication Waiting (CW) service. For the sake of description, the Communication Waiting service in the TISPAN is still referred to as Call Waiting service in the invention.

Although used differently from the Call Waiting service in the traditional telecommunication network, the Call Waiting service as a PSTN/ISDN simulation service still needs to inherit essential features of the Call Waiting service in the traditional telecommunication network. However, the existing PSTN/ISDN simulation services are allowed to be activated through only an approach of permanent subscription by a user, but not allowed to be activated through an approach of a temporary subscription or to be deactivated through temporarily canceling Call Waiting, without sufficiently inheriting essential service features of the traditional telecommunication network, resulting in reduced convenience in using the service.

Furthermore, in the existing TISPAN, when the Call Waiting service for a user is enabled, the user is notified about a new incoming call and the network sends to the user a SIP MESSAGE message indicating that communication is waiting, at this time, the user may have the following options: 1) Ignoring the new incoming call, and the new incoming call is to be rejected (for example, the network returns a 486 busy here response code to the new incoming call) when a timer for monitoring started in the network expires (a CW timers expires); and 2) The user releases or holds the original session, and the network reroutes the new incoming call to the user (for example, the INVITE is rerouted to the user).

Obviously, the user may properly perform the operation of "ignoring" or "releasing the original session", however, the operation of "holding the original session" by the user may be problematic due to the fact that: the SIP MESSAGE message sent from the network to the user is intended to display a prompt of "Communication is waiting" on the SIP terminal for the user, so that the user is aware of the new incoming call, but the SIP terminal per se may not be aware of what the SIP MESSAGE message means; furthermore, when the user performs the hold operation, the original session is not released and only the direction of the established media flow is changed, therefore, the session still exists for the SIP terminal, as a result, when the network reroutes the new incoming call to the user and sends an INVITE message to the SIP terminal, the SIP terminal may possibly not accept the INVITE message of the new incoming call, and still return a response code of 486 busy here.

In other words, the SIP MESSAGE message sent from the network to the SIP terminal of the user notifies the user, but fails to enable the SIP terminal to perceive that the Call Waiting service is enabled, and consequently, the subsequent INVITE message of the new incoming call is still not accepted by the SIP terminal. It may be assumed that if a user who has not subscribed for the Call Waiting service holds the current session, and at this time an INVITE message of a new incoming call is sent to the SIP terminal of the user, it is apparent that whether the SIP terminal accepts the incoming call depends on the capability of the SIP terminal to establish media channels concurrently, and if the SIP terminal may establish only one media channel concurrently, a response code of 486 busy here is returned in response to the INVITE message of the new incoming call.

Therefore the existing Call Waiting service implemented in the TISPAN can not ensure the success in operations of the user of holding the original session and switching over to a new incoming call, and consequently the existing Call Waiting service may not be feasible.

As can be seen from the above, the existing Call Waiting service implemented in the TISPAN still needs an improvement and has the following two major drawbacks.

1. The existing Call Waiting service in the TISPAN is not allowed to be activated through an approach of a temporary subscription or to be deactivated through temporarily canceling Call Waiting, without sufficiently inheriting essential service features of the traditional telecommunication network, resulting in reduced convenience in using the service.

2. After the user is notified about a new incoming call, the success in operations of the user of holding the original session and switching over to the new incoming call can not be ensured, and consequently the existing Call Waiting service may not be feasible.

### Summary of the Invention

According to the invention, a method, system and device for implementing Call Waiting in a packet domain in provided, so that the activation approach using a temporary subscription and the deactivation approach of temporarily canceling Call Waiting are made available for a SIP terminal user, and the SIP terminal user may perform service operations of holding an original session and switching over to a new incoming call after being notified about the new incoming call.

The technical solutions in the invention adapted to address the above technical issues are as follows.

According to the invention, a method for implementing Call Waiting in a packet domain is provided, and the method is applicable to a system including a user terminal and a Call Waiting service control unit and includes:
sending, by a user, a SIP message carrying Call Waiting service information to the Call Waiting service control unit; and
obtaining, by the Call Waiting service control unit, the Call Waiting service information by parsing the received SIP message, and executing an operation indicated by the Call Waiting service information.

In the above solution, the Call Waiting service information indicates a temporary subscription for a Call Waiting service; and executing the operation indicated by the Call Waiting service information is to enable the temporary subscription by the user for the Call Waiting service.

In the above solution, the Call Waiting service information indicates a service of temporarily canceling Call Waiting; and executing the operation indicated by the Call Waiting service information is to enable the temporary cancellation of the Call Waiting service for the user.

According to the invention, a method for implementing Call Waiting in a packet domain is further provided, the method is applicable to a system including a user terminal and a Call Waiting service control unit, and the method includes: during a session of a user, when the Call Waiting service control unit receives a request of a new incoming call to the user and invokes a Call Waiting service for the user,
sending, by the Call Waiting service control unit, to a terminal of the user a SIP message carrying Call Waiting service information indicating that the Call Waiting service is invoked; and
determining, by the terminal of the user, that the Call Waiting service is invoked, in accordance with the Call Waiting service information in the SIP message.

According to the invention, a system for implementing Call Waiting in a packet domain is further provided, and the system includes a user terminal, a network access unit, a call session control unit and a Call Waiting service control unit. The user terminal is adapted to send a SIP message carrying Call Waiting service information to the call session control unit via the network access unit; the call session control unit is adapted to trigger the SIP message to the Call Waiting service control unit; and the Call Waiting service control unit is adapted to obtain the Call Waiting service information by parsing the SIP message and execute an operation indicated by the Call Waiting service information.

According to the invention, a system for implementing Call Waiting in a packet domain is further provided, and the system includes a user terminal, a network access unit, a call session control unit and a Call Waiting service control unit. The call session control unit is adapted to trigger a request of a new incoming call to the user to the Call Waiting service control unit upon receiving the incoming call request during a call of the user; the Call Waiting service control unit is adapted to invoke a Call Waiting service for the user upon receiving the new incoming call request if the user has subscribed for the Call Waiting service, and the Call Waiting service control unit is adapted to send to the user terminal of the user via the call session control unit after invoking the Call Waiting service for the user, a SIP message carrying Call Waiting service information indicating that the Call Waiting service is invoked; and the user terminal is adapted to determine that the Call Waiting service is invoked in accordance with the Call Waiting service information in the SIP message.

According to the invention, a device for implementing Call Waiting service control in the packet domain is further provided, and the device includes a Call Waiting service information receiving module and a Call Waiting service information processing module. The Call Waiting service information receiving module is adapted to obtain Call Waiting service information by parsing a SIP message received and sends the Call Waiting service information to the Call Waiting service information processing module; and the Call Waiting service information processing module is adapted to perform an operation indicated by the Call Waiting service information.

According to the invention, a device for implementing Call Waiting service control in the packet domain is further provided, and the device includes a Call Waiting service processing module and a Call Waiting service information sending module. The Call Waiting service processing module is adapted to receive a request of a new incoming call to a user during a call of the user, and invoke a Call Waiting service for the user and notify the Call Waiting service information sending module if the user has subscribed for the Call Waiting service; and the Call Waiting service information sending module is adapted to generate Call Waiting service information indicating invoking of the Call Waiting service in accordance with the fact that the Call Waiting service for the user is invoked, and send the Call Waiting service information via a SIP message.

The invention is advantageous in that operations of activation using a temporary subscription for Call Waiting and deactivation using the temporarily canceling Call Waiting are made available for the SIP terminal user in the inventive solutions, thereby improving greatly the convenience of the user in using the Call Waiting service.

Furthermore, with the inventive solutions, the user may perform operations of holding an original session and switching over to a new incoming call after being notified about the new incoming call, and the operations are fully feasible.

### Brief Description of the Drawings

Figure 1 is a network logic structural diagram of a packet core network using the SIP as call control signaling;

Figure 2 is a flow chart of activation using a temporary subscription and deactivation by temporarily canceling Call Waiting in the implementation of Call Waiting according to an embodiment of the invention; and

Figure 3 is an operation flow chart in which a SIP terminal user holds an original session and switches over to a new incoming call after being notified about the new incoming call according to an embodiment of the invention.

### Detailed Description of the Invention

The invention will be further described in detail hereinafter with reference to the drawings and embodiments.

According to the invention, a method for a SIP terminal user to use a Call Waiting service in a packet telecommunication network using the SIP as core network call control signaling is provided, so that activation approach using a temporary subscription and deactivation approach of temporarily canceling Call Waiting are made available for the SIP terminal user, and the SIP terminal user may perform service operations of holding an original session and switching over to a new incoming call after being notified about the new incoming call.

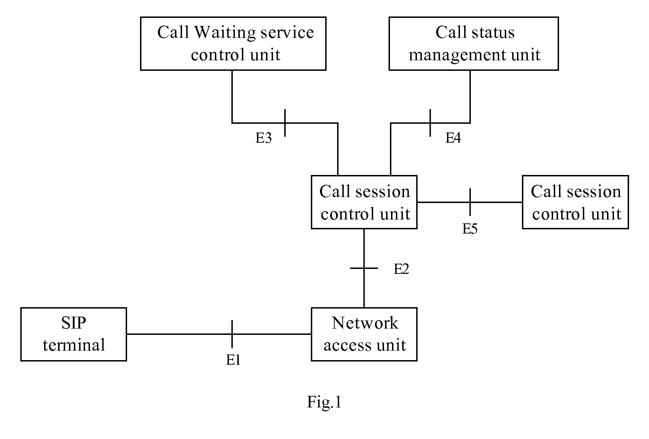

A network logic structural diagram of a packet core network using the SIP as the call control signaling to which the invention is applicable is as illustrated in Figure 1, wherein:

1. A network access unit is adapted to enable a SIP terminal to access the packet core network, and provide functions of registration, authentication, authorization, etc. The E1 interface is a SIP interface. In the TISPAN described above, the network access unit is referred to as Proxy-Call Session Control Function (P-CSCF).

2. A call session control unit is adapted to provide functions of call control, route relaying, etc., for a SIP terminal user with an access to the packet core network, and may trigger a call to different service control units. If the call session control unit and the network access unit are separate network entities, the E2 interface between the call session control unit and the network access unit is a SIP interface, and if the call session control unit and the network access unit are the same network entity, the E2 interface may be a SIP interface or a privately-defined internal interface. The E5 interface between two call session control units is a SIP interface. In the TISPAN described above, the call session control unit is referred to as Serving-Call Session Control Function (S-CSCF).

3. A service control unit is adapted to provide various service logic control functions for the SIP terminal user with an access to the packet core network, thus providing a hosting execution environment for various services. A Call Waiting service control unit is a service control unit providing a logic control function of the Call Waiting service for the SIP terminal user. If the service control unit and the call session control unit are separate network entities, the E3 interface between the service control unit and the call session control unit is a SIP interface, and if the service control unit and the call session control unit are the same network entity, the E3 interface may be a SIP interface or a privately-defined internal interface. In a network, there may be a plurality of service control units for processing different services. In the TISPAN mentioned above, the service control unit is referred to as Application Server (AS).

4. A call status management unit is adapted to provide a call status management function for the SIP terminal user with an access to the packet core network. The call status management unit receives a query about a call status of the user from another network element and returns the current call status of the user. In the invention, the call status management unit provides information on a trigger condition of "user busy" under which the Call Waiting service for the user is applied. If the call status management unit and the call session control unit are separate network entities, the E4 interface between the call status management unit and the call session control unit is a SIP interface, and if the call status management unit and the call session control unit are the same network entity, the E4 interface is a SIP interface or a privately-defined internal interface.

As described above, the invention is to make the activation using a temporary subscription and deactivation by temporarily canceling Call Waiting to be available for the SIP terminal user, and enable the SIP terminal user to perform operations of holding an original session and switching over to a new incoming call after being notified about the new incoming call. Hereinafter, the technical solutions of the invention will be described below respectively.

1. Activation using a temporary subscription and deactivation by temporarily canceling Call Waiting

Although the Call Waiting service brings much convenience to a user so that no important incoming call is missed even if the user is busy, the Call Waiting service may cause interruptions to a session already established by the user. The user may expect not to be interrupted by services including the Call Waiting service during a certain period of time or an important call, for this purpose, it is necessary to provide a SIP terminal user with activation using a temporary subscription and deactivation by temporarily canceling Call Waiting, so that the user may choose freely.

A process in which a SIP terminal user activates Call Waiting by means of a temporary subscription and deactivates Call Waiting by means of temporarily canceling Call Waiting will be described below in an embodiment. Assume that a SIP terminal user A has activated Call Waiting by means of a temporary subscription, subsequently, the user A needs to make a call with a user B, and may deactivate Call Waiting by means of temporarily canceling Call Waiting upon initiating a session so that the call with the user B is not to be interrupted by another new incoming call; or no deactivation approach of temporarily canceling Call Waiting is enabled upon initiating the session, but the user A expects not to be interrupted temporarily during the call with the user B, and thus performs the operation of deactivation by temporarily canceling Call Waiting.

In this technical solution, a network access unit and a call session control unit related to a user other than the user A have little association with essential technologies of the present embodiment and therefore are omitted in Figure 1 for the sake of description and a simplified flow chart.

It shall be noted that the illustration in the flow chart and the descriptions presented in the invention are provided merely to highlight the essential technologies of the invention, but are neither representative of a complete call and service control flow nor exhaustive of all possible branches.

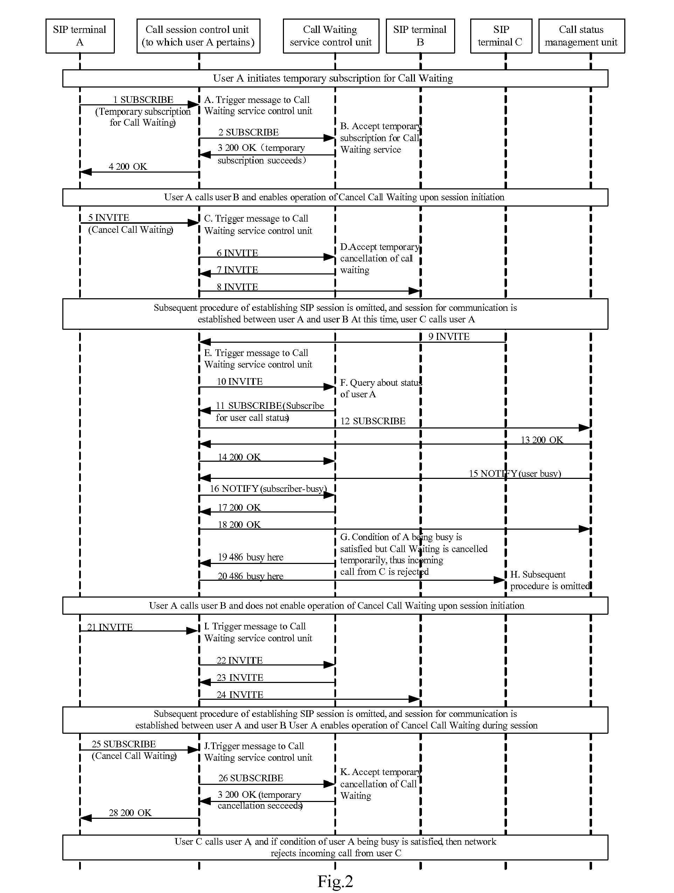

Figure 2 is a flow chart of activation using a temporary subscription and deactivation by temporarily canceling Call Waiting in the implementation of Call Waiting according to an embodiment of the invention, and the following steps are included.

Step 1: A user of a SIP terminal A (i.e., a user A) initiates an activation operation using a temporary subscription for a Call Waiting service by sending a SIP SUBSCRIBE message. The SIP SUBSCRIBE message is extended to include an event package (for example, referred to as t-cw) indicating a subscribing request for "temporary subscription for Call Waiting", and the event package may be sent via a header field *Event.* Thus, the contents of the SIP SUBSCRIBE message may include Event: t-cw.

Step 2: The SIP SUBSCRIBE message is sent to the call session control unit via the network access unit, and the call session control unit triggers the SIP SUBSCRIBE message to the Call Waiting service control unit, for example in such a way that the call session control unit triggers the SIP SUBSCRIBE message upon determining that the user A has subscribed for the Call Waiting service or upon determining the contents of "t-cw" of the event package (i.e. the event package of the subscribing request for a temporary subscription for Call Waiting) in the header field *Event.*

Step 3: The Call Waiting service control unit receives the SIP SUBSCRIBE message, determines that the SIP SUBSCRIBE message is used by the user A to request for a temporary subscription for Call Waiting in accordance with the contents of "t-cw" of the event package in the header field *Event,* accepts the subscribing request for the temporary subscription for Call Waiting from the user A, and returns to the call session control unit a 200 OK response code indicating a successful temporary subscription in response to the SIP SUBSCRIBE message.

Step 4: The 200 OK response code is sent from the call session control unit to the SIP terminal A via the network access unit. Thus, the procedure in which the user A subscribers temporarily for the Call Waiting is finished.

Step 5: The user of the SIP terminal A (i.e., the user A) calls a user B by sending a SIP INVITE message, and the user A enables an operation of temporarily canceling Call Waiting upon initiating the session because the user A expects no interruption during the session; the SIP message is extended to include a header field (for example, referred to as *P-CCW)* indicating temporarily canceling Call Waiting, thus the SIP INVITE message includes the contents of P-CCW: true. The header field *P-CCW* with a value of "true" indicates that the temporary cancellation of Call Waiting is enabled, and the header field *P-CCW* with a default value of "false" indicates that the temporary cancellation of Call Waiting is disabled.

Of course, a parameter may alternatively be extended in an existing header field to represent an identifier indicating whether an operation of temporarily canceling Call Waiting is enabled, and descriptions thereof will be omitted herein.

Step 6: The SIP INVITE message is sent to the call session control unit via the network access unit, and the call session control unit triggers the SIP INVITE message to the Call Waiting service control unit, for example in such a way that the call session control unit triggers the SIP INVITE message upon determining that the user A has subscribed for the Call Waiting service or upon determining that the contents of the header field *P-CCW* are "true".

Step 7: The Call Waiting service control unit receives the SIP INVITE message, and determines that the temporary cancellation of Call Waiting is applied to the session and the user A has subscribed for the Call Waiting service (through an approach of permanent subscription or an approach of temporary subscription) in accordance with the fact that the contents of the header field *P-CCW* are "true", in this case, the Call Waiting service control unit accepts the request for temporarily canceling Call Waiting from the user A and sets a flag of temporarily canceling Call Waiting for the user A, and the flag will be cleared by the Call Waiting service control unit when the session is released. The Call Waiting service control unit returns the SIP INVITE message to the call session control unit.

Step 8: The call session control unit receives the SIP INVITE message, and sends, by means of routing and addressing, the SIP INVITE message to a SIP terminal B of the user B through relaying by the call session control unit and the network access unit of the user B. A subsequent procedure of establishing a SIP session is omitted herein, and the session for communication is to be established between the user A and the user B.

Step 9: A user C calls the user A by sending a SIP INVITE message to the call session control unit of the user A through relaying by the network access unit and the call session control unit of the user C.

Step 10: The call session control unit receives the SIP INVITE message and triggers the SIP INVITE message to the Call Waiting service control unit, for example in such a way that the call session control unit triggers the message upon determining that the user A has subscribed for the Call Waiting service.

Step 11: The Call Waiting service control unit receives the SIP INVITE message. The "user busy" is a trigger condition to apply the Call Waiting service, thus the Call Waiting service control unit needs to send a query request to the call status management unit to query about the current status of the user. Particularly, if the Call Waiting service control unit and the call status management unit are two separate network elements, the Call Waiting service control unit may "subscribe for" the current status of the user from the call status management unit via a SIP SUBSCRIBE message.

Step 12: The call session control unit sends to the call status management unit the SIP SUBSCRIBE message for "subscribing for" the current status of the user. Of course, this step may be omitted, and the Call Waiting service control unit may also send the SIP SUBSCRIBE message directly to the call status management unit.

Step 13: The call status management unit receives the SIP SUBSCRIBE message for "subscribing for" the current status of the user and returns a 200 OK response code indicating acceptance of the subscription.

Step 14: The call session control unit sends the 200 OK response code to the Call Waiting service control unit.

Step 15: The call status management unit sends a SIP NOTIFY message carrying the current status of the user, such as "busy" or "available". How the call status management unit obtains the user status is not described in the descriptions of the invention. Briefly, one of or combination of the following two methods may be used: a method of determining whether the number of sessions established currently for the user reaches the maximum number of the ongoing sessions allowed for the user; and a method of determining whether the session bandwidth requested by the user is satisfied. In the present embodiment, it is assumed that the current status of the user returned by the call status management unit is "busy".

Step 16: The call session control unit sends the NOTIFY message to the Call Waiting service control unit.

Step 17: The Call Waiting service control unit returns a 200 OK response code indicating acceptance of the NOTIFY message.

Step 18: The call session control unit sends the 200 OK response code to the call status management unit.

Step 19: The Call Waiting service control unit obtains from the NOTIFY message the status information indicating that the user is busy, and determines that the user A has activated the Call Waiting service (by the temporary subscription) but is provided with the flag of temporarily canceling Call Waiting, and therefore the Call Waiting service control unit does not trigger the application of the Call Waiting service, but returns to the user C initiating the incoming call a response code of 486 busy here, to indicate that the user A is busy.

Step 20: The call session control unit sends the response code of 486 busy here to a SIP terminal C of the user C via the call session control unit and the network access unit of the user C. Subsequently, the process on the session request of SIP INVITE initiated from the user C is to be finished, but the description of the process is omitted herein.

Step 21: The user A calls the user B, and a SIP INVITE message is sent by the SIP terminal A to the SIP terminal B.

Step 22: The SIP INVITE message is sent to the call session control unit via the network access unit, and the call session control unit triggers the SIP INVITE message to the Call Waiting service control unit, for example in such a way that the call session control unit triggers the SIP INVITE message upon determining that the user A has subscribed for the Call Waiting service.

Step 23: The Call Waiting service control unit returns the SIP INVITE message to the call session control unit.

Step 24: The call session control unit receives the SIP INVITE message, and sends, by means of routing and addressing, the SIP INVITE message to the SIP terminal B of the user B through relaying by the call session control unit and the network access unit of the user B. A subsequent procedure of establishing a SIP session is omitted herein, and the session for communication is to be established between the user A and the user B.

Step 25: The user A expects no interruption during the session with the user B and performs an operation of temporarily canceling Call Waiting by sending a SIP SUBSCRIBE message which is extended with an event package indicating a subscribing request for "temporarily canceling Call Waiting". The event package for the subscribing request is referred to as, for example ccw, and may be sent via a header field *Event.* Thus, the contents of the SIP SUBSCRIBE message may include Event: ccw.

Step 26: The SIP SUBSCRIBE message is sent to the call session control unit via the network access unit, and the call session control unit triggers the SIP SUBSCRIBE message to the Call Waiting service control unit, for example in such a way that the call session control unit triggers the SIP SUBSCRIBE message upon determining that the user A has subscribed for the Call Waiting service or upon determining the contents of the event package in the header field *Event* (the event package of the subscribing request for temporarily canceling Call Waiting) are "ccw".

Step 27: The Call Waiting service control unit receives the SIP SUBSCRIBE message, determines that the user A requests to temporarily cancel Call Waiting in accordance with the contents of "ccw" of the event package in the header field *Event,* accepts the subscribing request for temporarily canceling Call Waiting from the user and returns to the call session control unit a 200 OK response code indicating successful temporary cancellation in response to the SIP SUBSCRIBE message.

Step 28: The 200 OK response code is sent from the call session control unit to the SIP terminal A via the network access unit. Thus, the procedure of temporarily canceling Call Waiting requested by the user A is finished. At this time, if the user C calls the user A and the condition "busy" of the user A is satisfied, the network returns to the user C a response code of 486 busy here to reject the incoming call from the user C. The above steps 9 to 20 can be made reference to for a specific procedure.

In the above embodiment, a SIP message is extended to include the event package *t-cw* indicating a subscribing request for a "temporary subscription for Call Waiting", the header field *P-CCW* indicating "temporarily canceling Call Waiting" and the event package *ccw* indicating a subscribing request for "temporarily canceling Call Waiting". The three pieces of extended information of event package *t-cw,* the header field *P-CCW* and the event package *ccw* indicate respectively an activation operation using a temporary subscription for Call Waiting, an operation of temporarily canceling Call Waiting upon initiating a session and an operation of temporarily canceling Call Waiting during a session, alternatively, the three pieces of extended information may be combined into a piece of extended information, in other words, the SIP message is extended with an event package indicating a subscribing request for "Call Waiting", and the event package includes a parameter indicating operation types of the above three operations.

Thus in step 1 of the above flow, when the user enables the activation operation using a temporary subscription for Call Waiting, the SIP SUBSCRIBE message includes the following contents:
Event: cw; para=temp-active
where the parameter *para* has a value of "temp-active" indicating the activation operation using the temporary subscription for Call Waiting.

In step 5 of the above flow, when the user enables the operation of temporarily canceling Call Waiting upon initiating the session, the SIP INVITE message includes the following contents:
Subscription: cw; para=temp-deactive
wherein the header field *Subscription* is a SIP header field newly extended in the INVITE message, so that the INVITE message may also be used to indicate a subscription and the type of the subscribing event package may be sent via the header field *Subscription.* In the above embodiment, the event package of a subscribing for "Call Waiting" is sent via the header field *Subscription,* and the value of the parameter *para* in the event package may be set as "temp-deactive" to indicate the operation of temporarily canceling Call Waiting. It is apparent that the event package *ccw* indicating a subscribing request for "temporarily canceling Call Waiting" may also be used directly in the header field *Subscription* to indicate an operation of temporarily canceling Call Waiting upon initiating the session by the user.

In step 25 of the above flow, when the user enables an operation of temporarily canceling Call Waiting during the session, the SIP SUBSCRIBE message includes the following contents:
Event: cw; para=temp-deactive
where the parameter *para* has a value of "temp-deactive" indicating the operation of temporarily canceling Call Waiting.

In the above embodiment, to cancel the Call Waiting service subscribed for temporarily, the user needs simply to send a SIP SUBSCRIBE message again through the SIP terminal, the SIP SUBSCRIBE message may carry the same event package indicating a temporary subscription for Call Waiting, with an expiration header field *Expires* being set as "0"; and the Call Waiting service control unit cancels the Call Waiting temporarily subscribed for by the user upon receiving the SIP SUBSCRIBE message.

2. The SIP terminal user holds an original session and switches over to a new incoming call after being notified about the new incoming call.

In the prior art, the success in operations by a SIP terminal user of holding an original session and switching over to a new incoming call after the SIP terminal user is notified about the new incoming call can not be ensured, because the network can not enable the SIP terminal to perceive that a Call Waiting service is applied, as described above. Therefore, in view of the drawback, it is necessary for a SIP terminal to perceive that a Call Waiting service for a user of the SIP terminal is applied when the user is notified about a new incoming call, so that the SIP terminal may process a subsequent INVITE message of the new incoming call.

The solution of the invention will be described below in another embodiment similar to the first embodiment, and a network access unit and a call session control unit (as well as a call status management unit) related to a user other than the user A have little association with essential technologies of the present embodiment and therefore are omitted in the figure for the sake of description.

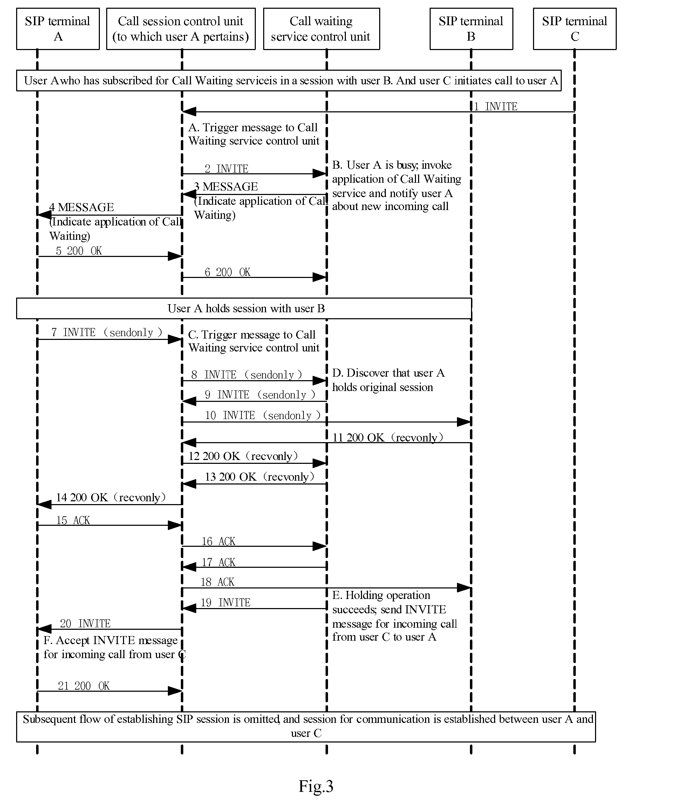

Figure 3 is an operation flow chart in which a SIP terminal user holds an original session and switches over to a new incoming call after being notified about the new incoming call according to an embodiment of the invention, and following steps are included.

Step 1: A user A of a SIP terminal A, who has subscribed for a Call Waiting service (through a permanent or temporary subscription), is on a session with a user B, a user C initiates a call to the user A by sending a SIP INVITE message to a call session control unit of the user A through relaying by a network access unit and the call session control unit of the user C.

Step 2: The call session control unit receives the SIP INVITE message to b e rerouted to the user A and triggers the SIP INVITE message to a Call Waiting service control unit, for example in such a way that the call session control unit triggers the SIP INVITE message upon determining that the user A has subscribed for the Call Waiting service.

Step 3: The Call Waiting service control unit receives the SIP INVITE message, and determines (in a way same as that in the first embodiment, and the Call Waiting service control unit may query the call status management unit about a status of the user) that the user A is busy and the user A has subscribed for the Call Waiting service, in this case, the Call Waiting service control unit invokes the application of the Call Waiting service and notifies the user A about the new incoming call by sending a SIP instant message (i.e., a SIP MESSAGE message). Unlike the prior art, the MESSAGE message shall indicate explicitly that the Call Waiting service for the user A is applied. In this embodiment, a Multipurpose Internet Mail Extensions (MIME) media type of "CW Media Type" is extended as a "Call Waiting application identifier", and this MIME media type may be defined as:
Media type name: application
Media subtype name: call-waiting
Required parameters: incoming-identity
Encoding scheme: XML

The MIME body includes the parameter *incoming-identity* indicating the identifier of the user of the new incoming call. The parameter *incoming-identity* may include an address and a name of the user, and take the same format and values as those of the header field *P-Asserted-Identity* in the INVITE message.

The MESSAGE message body carries the MIME body and includes the following contents:
Content-Type: application/call-waiting;
   Incoming-identity="Tessa Silvia"<sip:silvia@tele.com>

Step 4: The call session control unit sends the MESSAGE message carrying the MIME body indicating the application media type of the "Call Waiting application identifier" to the SIP terminal A of the user A via the network access unit.

Step 5: The SIP terminal A accepts the MESSAGE message and returns a 200 OK response code to the call session control unit via the network access unit.

Step 6: The call session control unit sends the 200 OK response code to the Call Waiting service control unit.

Step 7: The SIP terminal A of the user A obtains the address and name of the user initiating the incoming call by parsing the accepted MESSAGE message, perceives the application of the Call Waiting service for the user, and displays the user address "silvia@tele.com", the user name "Tessa Silvia" and a prompt like "New incoming call" on the terminal interface for the user A. The user A decides to hold temporarily the session with the user B and accepts the incoming call from the user C. To hold the session with the user B, the user A sends to the user B an INVITE message, in which the media flow attribute at the local side is changed as "sendonly" instructing to send but not receive a media flow, in other words, the SIP terminal B of the user B is also required not to send a media flow to the SIP terminal A.

Step 8: The INVITE message is sent to the call session control unit via the network access unit, and the call session control unit triggers the INVITE message to the Call Waiting service control unit, for example in such a way that the call session control unit triggers the INVITE message upon determining that the user A has subscribed for the Call Waiting service.

Step 9: The Call Waiting service control unit receives the INVITE message, realizes that the user A starts to hold the session with the user B, and returns the INVITE message to the call session control unit.

Step 10: The call session control unit sends the INVITE message to the SIP terminal B of the user B through relaying by the call session control unit and the network access unit of the user B.

Step 11: The SIP terminal B of the user B receives the INVITE message and returns a 200 OK response code in which the media flow attribute at the local side is changed as "recvonly" instructing to receive only a media flow. The 200 OK response code is sent to the call session control unit of the user A through relaying by the call session control unit and the network access unit of the user B.

Steps 12 to 14: The 200 OK response code is sent to the SIP terminal A of the user A.

Step 15: The SIP terminal A of the user A sends an ACK message.

Steps 16 to 18: The ACK message is sent to the SIP terminal B of the user B, so that the user A may hold the session with the user B.

Step 19: The Call Waiting service control unit realizes the successful hold operation by the user A upon receiving the ACK message, and sends to the user A the SIP INVITE message of the incoming call from the user C.

Step 20: The call session control unit sends the INVITE message to the SIP terminal A of the user A via the network access unit.

Step 21: The SIP terminal A of the user A receives the INVITE message of the incoming call from the user C, allows the incoming call of the INVITE message in accordance with the previously accepted "Call Waiting application identifier", starts to establish a session with the user C and returns a 200 OK response code. The subsequent flow of establishing the SIP session is omitted, and the session for communication will be established between the user A and the user C.

In step 3 of this embodiment, an application media type representing the "Call Waiting application identifier" is extended. The "Call Waiting application identifier" may also be represented with a newly extended SIP header field or header field parameter including the address and name of the user of the new incoming call. Detailed description of the extension will be omitted herein.

Furthermore, in step 3 of this embodiment, the Call Waiting service control unit notifies the user about the application of the subscribed Call Waiting service by sending the SIP MESSAGE message. Alternatively, the Call Waiting service control unit may notifies the user by sending other SIP message such as a SIP INFO message. Or, the SIP INVITE message of the new incoming call from the user C may carry the Call Waiting application identifier and be sent to the user A, and the SIP terminal A of the user A performs control process in accordance with the Call Waiting application identifier carried in the SIP INVITE message, descriptions of which will be omitted herein.

Based upon the above method, a system for implementing Call Waiting in a packet domain is further provided in the invention, and the system includes a user terminal, a network access unit, a call session control unit and a Call Waiting service control unit. The user terminal is connected with the network access unit, the network access unit is connected with the call session control unit, and the call session control unit is in turn connected with the Call Waiting service control unit. Basic functions of the respective units in the system are the same as those in Figure 1 described above and will not be described in detail here, and only the parts related to the invention will be set forth below.

The user terminal is adapted to send a SIP message carrying Call Waiting service information to the call session control unit via the network access unit. The call session control unit is adapted to trigger the SIP message to the Call Waiting service control unit. The Call Waiting service control unit is adapted to obtain the Call Waiting service information by parsing the SIP message and execute an operation as indicated in the Call Waiting service information. Particularly, the Call Waiting service information may indicate a temporary subscription for the Call Waiting service, in this case, the Call Waiting service control unit executes an operation of enabling the temporary subscription by the user for the Call Waiting service; and the Call Waiting service information may also indicate a service of temporarily canceling Call Waiting, in this case, the Call Waiting service control unit executes an operation of enabling the temporary cancellation of the Call Waiting service for the user.

Furthermore during a session of the user, upon receiving a request of a new incoming call to the user, the call session control unit may trigger the incoming call request to the Call Waiting service control unit. Upon receiving the request for the new incoming call, the Call Waiting service control unit invokes the Call Waiting service for the user if the user has subscribed for the Call Waiting service, and subsequently sends a SIP message carrying Call Waiting service information to a user terminal of the user via the call session control unit. The Call Waiting service information, which may be a Call Waiting application identifier, may be used to indicate that the Call Waiting service is invoked. In this case, in accordance with the Call Waiting service information in the SIP message, the user terminal may determine that the Call Waiting service is invoked. Particularly, the user terminal may also display the Call Waiting service information indicating invoking of the Call Waiting service on the terminal interface.

According to the invention, a device for implementing Call Waiting service control in the packet domain is further provided, and the device includes a Call Waiting service information receiving module and a Call Waiting service information processing module. The device is typically implemented as a Call Waiting service control unit. Basic functions of the device are the same as those in Figure 1 described above and therefore will not be described in detail here, only the parts related to the invention will be set forth below.

Particularly, the Call Waiting service information receiving module obtains Call Waiting service information by parsing the received SIP message and sends the information to the Call Waiting service information processing module. The Call Waiting service information processing module executes an operation as indicated in the Call Waiting service information. The Call Waiting service information is used to indicate a temporary subscription for a Call Waiting service or a service of temporarily canceling Call Waiting, thus the Call Waiting service information processing module executes an operation of enabling the temporary subscription by the user for the Call Waiting service or enabling the service of temporarily canceling Call Waiting for the user.

During a session of the user, the Call Waiting service processing module may receive a request of a new incoming call to the user, and invokes the Call Waiting service for the user and notifies the Call Waiting service information sending module about the invoking if the user has subscribed for the Call Waiting service. The Call Waiting service information sending module generates Call Waiting service information indicating invoking of the Call Waiting service in accordance with invoking of the Call Waiting service for the user and sends the information via a SIP message. The Call Waiting service information may be a Call Waiting application identifier.

According to the invention, a method and system for implementing Call Waiting in the packet domain is provided, so that in a packet telecommunication network using the SIP as core network call control signaling, a SIP terminal user may enable a temporary subscription for a Call Waiting service and a service of temporarily canceling Call Waiting; when the Call Waiting service is applied, the information indicating an operation of a temporary subscription for Call Waiting, information indicating an operation of temporarily canceling Call Waiting and information that may be parsed by a SIP terminal and that indicates a Call Waiting application identifier may be included in a SIP message; and such information enables the SIP terminal user to perform operations of activation using a temporary subscription for Call Waiting and deactivation by temporarily canceling Call Waiting, so that the essential service features in the traditional telecommunication network are sufficiently inherited and the convenience of the user in using the Call Waiting service is improved greatly; furthermore, the user may perform operations of holding an original session and switching over to a new incoming call after being notified about the new incoming call, which is fully feasible.

Those skilled in the art can make various modifications to the invention without departing from the essentials and scope of the invention. The foregoing descriptions are merely intended for illustrating the preferred embodiments of the invention but not limiting the scope of the invention. Any equivalent changes made in light of the descriptions and the drawings are intended to be within the scope of the claims appended to the invention.

## Claims

1. A method for implementing Call Waiting in a packet domain applicable to a system comprising a user terminal and a Call Waiting service control unit, comprising:
sending, by a user, a Session Initiation Protocol, SIP, message carrying Call Waiting service information to the Call Waiting service control unit; and
obtaining, by the Call Waiting service control unit, the Call Waiting service information by parsing the received SIP message, and executing an operation as indicated in the Call Waiting service information.

2. The method according to claim 1, wherein the Call Waiting service information indicates a temporary subscription for a Call Waiting service; and
the executing the operation as indicated in the Call Waiting service information is to enable the temporary subscription by the user for the Call Waiting service.

3. The method according to claim 2, wherein the SIP message carrying the Call Waiting service information indicating the temporary subscription for the Call Waiting service is a SIP SUBSCRIBE message carrying an event packet indicating the temporary subscription for the Call Waiting service.

4. The method according to claim 2, further comprising: after the Call Waiting service control unit obtains the Call Waiting service information indicating the temporary subscription for the Call Waiting service by parsing the received SIP message,
determining, by the Call Waiting service control unit, whether the user is allowed for the temporary subscription for Call Waiting, and enabling the temporary subscription by the user for the Call Waiting service if the user is allowed for the temporary subscription for Call Waiting.

5. The method according to claim 2, further comprising:
sending, by the user, to the Call Waiting service control unit the SIP message carrying the Call Waiting service information indicating a Cancel Call Waiting service; and
enabling, by the Call Waiting service control unit, the Cancel Call Waiting service for the user in accordance with the Call Waiting service information obtained by parsing the received SIP message.

6. The method according to claim 1, wherein the Call Waiting service information indicates the service of temporarily canceling Call Waiting; and
the executing the operation as indicated in the Call Waiting service information is to enable the temporary cancellation of the Call Waiting service for the user.

7. The method according to claim 5 or 6, wherein the SIP message carrying the Call Waiting service information indicating the Cancel Call Waiting service is a SIP SUBSCRIBE message carrying an event packet indicating the Cancel Call Waiting service.

8. The method according to claim 5 or 6, wherein the SIP message carrying the Call Waiting service information indicating the Cancel Call Waiting service is a SIP INVITE message carrying a header field or an event packet indicating the Cancel Call Waiting service.

9. The method according to claim 2, 5 or 6, further comprising: during a session of the user, when the Call Waiting service control unit receives a request of an incoming call to the user and invokes the Call Waiting service for the user,
sending, by the Call Waiting service control unit, to a terminal of the user a SIP message carrying Call Waiting service information indicating that the Call Waiting service is invoked; and
determining, by the terminal of the user, that the Call Waiting service is invoked, in accordance with the Call Waiting service information in the SIP message.

10. The method according to claim 9, wherein the Call Waiting service information indicating that the Call Waiting service is invoked is a Call Waiting application identifier.

11. The method according to claim 10, wherein the Call Waiting application identifier comprises a user address and/or a user name of a calling user of the new incoming call.

12. The method according to claim 9, wherein the SIP message is a SIP instant MESSAGE message, a SIP INFO message or a SIP INVITE message.

13. A method for implementing Call Waiting in a packet domain applicable to a system comprising a user terminal and a Call Waiting service control unit, comprising: during a session of a user, when the Call Waiting service control unit receives a request of an incoming call to the user and invokes a Call Waiting service for the user,
sending, by the Call Waiting service control unit, to a terminal of the user a SIP message carrying Call Waiting service information indicating that the Call Waiting service is invoked; and
determining, by the terminal of the user, that the Call Waiting service is invoked, in accordance with the Call Waiting service information in the SIP message.

14. The method according to claim 13, wherein the Call Waiting service information indicating that the Call Waiting service is invoked is a Call Waiting application identifier.

15. The method according to claim 14, wherein the Call Waiting application identifier comprises a user address and/or a user name of a calling user of the new incoming call.

16. The method according to claim 13, wherein the SIP message is a SIP instant MESSAGE, a SIP INFO message or a SIP INVITE message.

17. The method according to claim 15, further comprising:
extracting, by the terminal of the user, the user address and/or the user name of the calling user of the new incoming call from the Call Waiting application identifier carried in the SIP message, and displaying the user address and/or the user name on a terminal interface.

18. A system for implementing Call Waiting in a packet domain, comprising a user terminal, a network access unit, a call session control unit and a Call Waiting service control unit, wherein:
the user terminal is adapted to send a SIP message carrying Call Waiting service information to the call session control unit via the network access unit;
the call session control unit is adapted to trigger the SIP message to the Call Waiting service control unit; and
the Call Waiting service control unit is adapted to obtain the Call Waiting service information by parsing the SIP message, and execute an operation as indicated in the Call Waiting service information.

19. The system according to claim 18, wherein the Call Waiting service information indicates a temporary subscription for a Call Waiting service or temporary cancellation of a Call Waiting service; and
the Call Waiting service control unit enables the temporary subscription for the Call Waiting service or temporary cancellation of the Call Waiting service in accordance with the Call Waiting service information indicating the temporary subscription for the Call Waiting service or temporary cancellation of the Call Waiting service.

20. A system for implementing Call Waiting in the packet domain, comprising a user terminal, a network access unit, a call session control unit and a Call Waiting service control unit, wherein during a session of a user, the call session control unit is adapted to trigger a request of a new incoming call to the user to the Call Waiting service control unit upon receiving the incoming call request; and the Call Waiting service control unit is adapted to invoke a Call Waiting service for the user if the user has subscribed for the Call Waiting service upon receiving the request for the new incoming call, wherein:
the Call Waiting service control unit is adapted to send, after invoking the Call Waiting service for the user, to the user terminal of the user a SIP message carrying Call Waiting service information via the call session control unit, where the Call Waiting service information indicates that the Call Waiting service is invoked; and
the user terminal is adapted to determine that the Call Waiting service is invoked, in accordance with the Call Waiting service information in the SIP message.

21. The system according to claim 20, wherein the user terminal is further adapted to display on a terminal interface the Call Waiting service information indicating that the Call Waiting service is invoked.

22. A device for implementing Call Waiting service control in the packet domain, comprising a Call Waiting service information receiving module and a Call Waiting service information processing module, wherein:
the Call Waiting service information receiving module is adapted to obtain Call Waiting service information by parsing the received SIP message, and sends the information to the Call Waiting service information processing module; and
the Call Waiting service information processing module is adapted to execute an operation as indicated in the Call Waiting service information.

23. The device according to claim 22, wherein the Call Waiting service information indicates a temporary subscription for a Call Waiting service or temporary cancellation of the Call Waiting service, and the Call Waiting service information processing module executes an operation of enabling the temporary subscription by a user for the Call Waiting service or enabling the temporary cancellation of the Call Waiting service for the user.

24. A device for implementing Call Waiting service control in the packet domain, comprising a Call Waiting service processing module and a Call Waiting service information sending module, wherein:
the Call Waiting service processing module is adapted to receive a request of a new incoming call to a user during a session of the user, and invoke a Call Waiting service for the user and notify the Call Waiting service information sending module if the user has subscribed for the Call Waiting service; and
the Call Waiting service information sending module is adapted to generate Call Waiting service information indicating invoking of the Call Waiting service in accordance with invoking of the Call Waiting service for the user and sends the information via a SIP message.

25. The device according to claim 24, wherein the Call Waiting service information is a Call Waiting application identifier.
